# EUROPÄISCHE PATENTSCHRIFT

(11) **EP 2 829 339 B1**
(45) Veröffentlichungstag und Bekanntmachung des Hinweises auf die Patenterteilung: **25.10.2017**
(21) Anmeldenummer: 14175550.4
(22) Anmeldetag: 03.07.2014
(51) Int. Cl.: B23B 31/16, B23Q 1/76

(54) **Positioniervorrichtung zum Positionieren von Werkstücken, Werkzeugmaschine mit einer derartigen Positioniervorrichtung, Verfahren zum Positionieren von Werkstücken**
Positioning device for positioning workpieces, machine tool with such a positioning device, method for positioning workpieces
Dispositif de positionnement pour pièces à usiner, machine-outil dotée d'un tel dispositif de positionnement, procédé de positionnement de pièces à usiner

(30) Priorität: 17.07.2013 DE 102013214017
(43) Veröffentlichungstag der Anmeldung: 28.01.2015
(73) Patentinhaber: TRUMPF Werkzeugmaschinen GmbH + Co. KG, 71254 Ditzingen (DE)
(72) Erfinder: Linder, Bernd, 72501 Gammertingen (DE); Popp, Torsten, 72505 Krauchenwies (DE); Gaiser, Bernd, 72519 Veringendorf (DE)
(74) Vertreter: Kohler Schmid Möbus Patentanwälte

(56) Entgegenhaltungen:
- DE-A1-102011 013 726
- US-A1- 2004 076 486

## Beschreibung

Die Erfindung betrifft eine Positioniervorrichtung zum Positionieren von Werkstücken gegenüber einer Bearbeitungseinrichtung einer Werkzeugmaschine, gemäß dem Oberbegriff des Anspruchs 1. Eine solche Positioniervorrichtung ist aus dem Dokument DD155960 A1 bekannt. Die Erfindung betrifft des Weiteren ein Verfahren zum Positionieren von Werkstücken gegenüber einer Bearbeitungseinrichtung einer Werkzeugmaschine, gemäß dem Oberbegriff des Anspruchs 17. Ein solches Verfahren ist aus dem Dokument DD155960 A1 bekannt. Gattungsgemäßer Stand der Technik ist offenbart in DD 155 960 B1. Diese Druckschrift beschreibt ein Mehrbackenspannfutter für Hohlkörper aus Glas. Mehrere Basisspannbacken des Mehrbackenspannfutters liegen einander gegenüber und werden in radialer Richtung einer Spannfutterachse mittels eines konzentrisch mit der Spannfutterachse angeordneten Stellrings grob eingestellt. Zu diesem Zweck befinden sich der Stellring und die Basisspannbacken in einem gegenseitigen Gewindeeingriff, aufgrund dessen eine Drehung des Stellrings um die Spannfutterachse eine Verlagerung der Basisspannbacken in radialer Richtung der Spannfutterachse bewirkt. An jeder der Basisspannbacken ist in radialer Richtung der Spannfutterachse ein Spanneinsatz geführt, an dessen von der Spannfutterachse abliegenden Seite ein an der betreffenden Basisspannbacke drehbar gelagerter Winkelhebel mit einem seiner beiden Schenkel angreift. An dem anderen Schenkel wirkt der Winkelhebel mit einem mit der Spannfutterachse konzentrischen Schubrohr zusammen. Das Schubrohr kann mittels einer pneumatischen Kolben-Zylinder-Einheit längs der Spannfutterachse verschoben werden.

Zum Einspannen eines Hohlkörpers werden die Basisspannbacken des Mehrbackenspannfutters zunächst durch manuelle Betätigung des Stellrings in radialer Richtung der Spannfutterachse in eine Position zugestellt, in welcher die Basisspannbacken von dem einzuspannenden Hohlkörper noch geringfügig beabstandet sind. In der betreffenden Drehstellung wird der Stellring mittels einer Kontermutter festgelegt. Sind die Basisspannbacken auf dieser Art und Weise grob eingestellt, so wird die pneumatische Kolben-Zylinder-Einheit betätigt. Die pneumatische Kolben-Zylinder-Einheit verschiebt das Schubrohr längs der Spannfutterachse. Die Längsbewegung des Schubrohres wird über die an den Basisspannbacken drehbar gelagerten Winkelhebel in eine senkrecht zu der Spannfutterachse gerichtete Spannbewegung der von den Winkelhebeln beaufschlagten Spanneinsätze umgesetzt. Am Ende ihrer Spannbewegung positionieren die Spanneinsätze den eingespannten Hohlkörper in radialer Richtung der Spannfutterachse.

Die Positionierung von Werkstücken vorrichtungs- und verfahrensbezogen zu vereinfachen, ist Aufgabe der vorliegenden Erfindung.

Erfindungsgemäß gelöst wird diese Aufgabe durch die Positioniervorrichtung nach Patentanspruch 1, die Werkzeugmaschine nach Patentanspruch 16 und das Positionierverfahren nach Patentanspruch 17.

Im Falle der Erfindung wird die Kolben-Zylinder-Einheit der Antriebs-Endstufe des Stellantriebes durch die Antriebsvorrichtung der Antriebs-Vorstufe motorisch in eine Antriebsposition zugestellt, von der ausgehend die Kolben-Zylinder-Einheit der Antriebs-Endstufe die abschließende Bewegung der einander gegenüberliegenden Positionierelemente der Positioniervorrichtung in die Funktionsstellung bewirkt. Ein manuelles Eingreifen eines Bedieners ist zum Bewegen der Kolben-Zylinder-Einheit in die Antriebsposition nicht erforderlich. Aufgrund der zwischen der Kolben-Zylinder-Einheit der Antriebs-Endstufe und den Positionierelementen bestehenden Bewegungsverbindung geht mit der durch die Antriebsvorrichtung der Antriebs-Vorstufe realisierten Bewegung der Kolben-Zylinder-Einheit eine Bewegung der Positionierelemente aus einer Ausgangsstellung in die Zwischenstellung einher, von der ausgehend die Positionierelemente den abschließenden Teil ihrer Bewegung in die Funktionsstellung ausführen.

Der Einsatz eines geregelten motorischen Spindelantriebs in der Antriebs-Vorstufe des Stellantriebes ermöglicht eine äußerst exakte Einstellung der Antriebsposition der Kolben-Zylinder-Einheit und damit auch eine äußerst exakte Einstellung der Zwischenstellung der Positionierelemente. Durch die exakte Einstellung der Zwischenstellung der Positionierelemente ist eine Grundvoraussetzung dafür geschaffen, dass die Positionierelemente nach ihrer abschließenden Bewegung exakt eine definierte Funktionsstellung einnehmen, die ihrerseits auf das zu positionierende Werkstück abgestimmt ist.

Ein exaktes Anfahren einer definierten Funktionsstellung durch die Positionierelemente ist insbesondere in Fällen unerlässlich, in denen empfindliche, beispielsweise leicht verformbare Werkstücke zu positionieren sind. Etwa bei der Positionierung von dünnwandigen Werkstücken ist die Funktionsstellung der Positionierelemente derart definiert, dass die in der Funktionsstellung befindlichen Positionierelemente das Werkstück nicht oder allenfalls nur geringfügig beaufschlagen. Gleichzeitig muss die Werkstück-Positionierung in Richtung der von den Positionierelementen definierten Positionierachse spielfrei sein. Eine Abweichung der Position, welche die Positionierelemente am Ende der mittels der Kolben-Zylinder-Einheit ausgeführten Bewegung einnehmen, von der Sollposition hätte in derartigen Fällen entweder eine unerwünschte Beanspruchung oder eine ungenügende Positionierung des zu positionierenden Werkstücks zur Folge.

Generell können die Positionierelemente in der Funktionsstellung kraftlos an dem positionierten Werkstück anliegen oder das Werkstück unter Kraftbeaufschlagung längs der von den Positionierelementen definierten Positionierachse einspannen. Als Positionierelemente in Frage kommen beispielsweise starre Positionier- bzw. Spannelemente aber auch drehbare Positionier- bzw. Spannelemente, die aufgrund ihrer drehbaren Lagerung Bewegungen des positionierten Werkstückes zulassen und damit ein sogenanntes Durchschiebefutter bilden können. In einem bevorzugten Anwendungsfall dient die erfindungsgemäße Positioniervorrichtung zum Positionieren von Rohren. Dementsprechend handelt es sich bei der erfindungsgemäßen Werkzeugmaschine bevorzugtermaßen um eine Rohrbearbeitungsmaschine.

Besondere Ausführungsarten der in den unabhängigen Patentansprüchen beschriebenen Erfindung ergeben sich aus den abhängigen Patentansprüchen 2 bis 15 und 18.

Die Positionierelemente lassen sich mittels des geregelten motorischen Spindelantriebs der erfindungsgemäßen Positioniervorrichtung außerordentlich exakt in die Zwischenstellung bewegen. Damit die mittels der Kolben-Zylinder-Einheit der Antriebs-Endstufe realisierte und von der Zwischenstellung ausgehende abschließende Bewegung der Positionierelemente gleichermaßen exakt ausgeführt werden kann, ist in bevorzugter Ausgestaltung der Erfindung vorgesehen, dass die in die Antriebsposition zugestellte Kolben-Zylinder-Einheit der Antriebs-Endstufe die Positionierelemente mit einem baulich definierten Antriebshub, insbesondere mit einem baulich definierten maximalen Antriebshub, relativ zueinander in die Funktionsstellung aufeinander zubewegt (Patentansprüche 2, 18). Aufgrund des Umstandes, dass der Betrag des von der Kolben-Zylinder-Einheit der Antriebs-Endstufe zur Überführung der Positionierelemente aus der Zwischenstellung in die Funktionsstellung ausgeführte Antriebshubes konstruktiv vorgegeben und nicht etwa steuerungstechnisch bedingt ist, besitzt die mittels der Kolben-Zylinder-Einheit ausgeführte Bewegung der Positionierelemente einen eindeutig definierten Betrag. An eine exakte Anordnung der Positionierelemente in der Zwischenstellung schließt sich folglich eine gleichermaßen exakte Bewegung der Positionierelemente in die Funktionsstellung an. Die Positionierelemente können daher die von ihnen zur Positionierung eines Werkstücks einzunehmende Funktionsstellung exakt anfahren.

Konstruktive Lösungen, die zur Umsetzung des erfindungsgemäßen Konzeptes in besonderem Maße geeignet sind, ergeben sich aus den Patentansprüchen 3 bis 6.

Mit einem geregelten Elektromotor wird ausweislich Patentanspruch 3 für die Antriebs-Vorstufe des erfindungsgemäßen Stellantriebs eine besonders feinfühlig regelbare Motorbauart eingesetzt. Die Verwendung eines Kugelgewindetriebes in der Antriebs-Vorstufe empfiehlt sich insbesondere aufgrund des reibungsarmen und exakten Laufs von Kugelgewindetrieben.

Zweckmäßigerweise wird der motorische Spindelantrieb der Antriebs-Vorstufe an dem Zylinder der Kolben-Zylinder-Einheit der Antriebs-Endstufe an diese angebunden (Patentanspruch 4). Insbesondere besteht die Möglichkeit, einen Gewindeeingriff zwischen einer Gewindespindel und einer mit dem Zylinder der Kolben-Zylinder-Einheit der Antriebs-Endstufe verbundenen Spindelmutter herzustellen.

Im Interesse einer Minimierung des Betrages der von den einzelnen Positionierelementen abschließend auszuführenden Bewegung empfiehlt es sich, zur Realisierung der Funktionsstellung beide Positionierelemente ausgehend von einer Zwischenstellung in die Funktionsstellung zu überführen. Zur Minimierung des damit verbundenen konstruktiven Aufwandes und des von den benötigten Maschinenelementen eingenommenen Bauraums ist in weiterer Ausgestaltung der Erfindung vorgesehen, dass ein und dieselbe Kolben-Zylinder-Einheit der Antriebs-Endstufe mit beiden Positionierelementen bewegungsverbunden ist (Patentanspruch 5), wobei die Antriebsverbindung zwischen der Kolben-Zylinder-Einheit der Antriebs-Endstufe und den beiden Positionierelementen insbesondere über ein gemeinsames Getriebeelement hergestellt sein kann (Patentanspruch 6).

Die im Falle der Erfindungsbauart nach Patentanspruch 7 vorgesehene lösbare Kupplung eröffnet die Möglichkeit, die Antriebsverbindung zwischen dem Antriebsmotor der Antriebs-Vorstufe und der Kolben-Zylinder-Einheit der Antriebs-Endstufe des erfindungsgemäßen Stellantriebes wahlweise herzustellen oder zu lösen. Ist die Antriebsverbindung zwischen dem Antriebsmotor der Antriebs-Vorstufe und der Kolben-Zylinder-Einheit der Antriebs-Endstufe gelöst, so kann insbesondere jede dieser beiden Komponenten der erfindungsgemäßen Positioniervorrichtung bewegt werden, ohne dass die jeweils andere Komponente diese Bewegung mitvollziehen müsste.

Bevorzugtermaßen sind dabei ein die Kolben-Zylinder-Einheit der Antriebs-Endstufe umfassender abtriebsseitige Teil des Stellantriebes an einer ersten Tragstruktur und ein den Antriebsmotor der Antriebs-Vorstufe umfassender antriebsseitiger Teil des Stellantriebes an einer zweiten Tragstruktur vorgesehen (Patentanspruch 8). Zum Aufschalten des Antriebsmotors der Antriebs-Vorstufe auf die Kolben-Zylinder-Einheit der Antriebs-Endstufe werden die erste Tragstruktur und die zweite Tragstruktur relativ zueinander in eine Kuppelstellung bewegt, in welcher die Antriebsverbindung zwischen dem Antriebsmotor der Antriebs-Vorstufe und der Kolben-Zylinder-Einheit der Antriebs-Endstufe über die lösbare Kupplung hergestellt werden kann.

Gemeinsam mit der Kolben-Zylinder-Einheit der Antriebs-Endstufe können auch die mit der Kolben-Zylinder-Einheit bewegungs- und antriebsverbundenen Positionierelemente an der ersten Tragstruktur vorgesehen sein (Patentanspruch 9). Die erste Tragstruktur bildet in diesem Fall eine kompakte Baueinheit der erfindungsgemäßen Positioniervorrichtung.

Die Bewegung, die zur Überführung der ersten Tragstruktur und der zweiten Tragstruktur in die Kuppelstellung erforderlich ist, wird in weiterer bevorzugter Ausgestaltung der Erfindung als Drehbewegung der ersten Tragstruktur ausgeführt (Patentanspruch 10). Eine derartige Drehbewegung der ersten Tragstruktur empfiehlt sich insbesondere dann, wenn an der ersten Tragstruktur nicht nur die Kolben-Zylinder-Einheit sondern auch die dieser zugeordneten Positionierelemente vorgesehen sind und wenn die sich damit ergebende Baueinheit dazu dient, positionierte Werkstücke im Rahmen der Werkstückbearbeitung gegenüber einer Bearbeitungseinrichtung einer Werkzeugmaschine um die Drehachse der ersten Tragstruktur zu drehen. In diesem Fall kann die zu Bearbeitungszwecken ohnehin vorgesehene Drehbeweglichkeit der ersten Tragstruktur auch dazu genutzt werden, die erste Tragstruktur und die zweite Tragstruktur relativ zueinander in die Kuppelstellung zu bewegen.

Die Positioniervorrichtung nach Patentanspruch 11 weist mehrere Positionierelementpaare auf, die jeweils aus zwei einander gegenüberliegenden Positionierelementen bestehen und die Positionierachsen definieren, die in Umfangsrichtung eines von den Positionierelementpaaren gemeinschaftlich festgelegten Werkstücks gegeneinander versetzt sind. Der Stellantrieb dieser Erfindungsbauart weist für jedes der Positionierelementpaare eine Antriebs-Vorstufe und eine Antriebs-Endstufe der vorstehend beschriebenen Art auf. Vorteilhafterweise bietet eine derartige Positioniervorrichtung die Möglichkeit einer mehrachsigen Positionierung des gegenüber der zugehörigen Bearbeitungseinrichtung definiert anzuordnenden Werkstücks, wobei eine mehrachsige Werkstückpositionierung auch dann realisierbar ist, wenn die Werkstücke in den einzelnen Achsrichtungen voneinander verschiedene Abmessungen besitzen.

In Weiterbildung der Positioniervorrichtung nach Patentanspruch 11 ist ausweislich Patentanspruch 12 ein Stellantrieb vorgesehen, der für mehrere Positionierelementpaare eine gemeinsame Antriebs-Vorstufe oder einen gemeinsamen Antriebs-Vorstufenteil aufweist. Umfasst auch der gemeinsame Antriebs-Vorstufenteil den Antriebsmotor der Antriebs-Vorstufe, so kann nicht nur der Antriebsmotor der gemeinsamen Antriebs-Vorstufe sondern auch der Antriebsmotor des gemeinsamen Antriebs-Vorstufenteils mittels einer lösbaren Kupplung nacheinander auf die Kolben-Zylinder-Einheiten für die verschiedenen Positionierelementpaare aufgeschaltet werden, um die Kolben-Zylinder-Einheiten der betreffenden Antriebs-Endstufen nacheinander in die Antriebsposition und dadurch die den Kolben-Zylinder-Einheiten zugeordneten Positionierelementpaare nacheinander in eine Zwischenstellung zu überführen. Die Erfindungsbauart nach Patentanspruch 12 kommt folglich mit einem einzigen Antriebsmotor für mehrere Kolben-Zylin-der-Einheiten aus. Der konstruktive Aufwand zur Realisierung dieser Erfindungsbauart ist folglich ebenso gering wie ihr Platzbedarf.

Zum Aufschalten des gemeinsamen Antriebsmotors der gemeinsamen Antriebs-Vorstufe oder des gemeinsamen Antriebs-Vorstufenteils auf die Kolben-Zylinder-Einheiten der Antriebs-Endstufen werden die gemeinsame Antriebs-Vorstufe oder der gemeinsame Antriebs-Vorstufenteil einerseits und die betreffenden Kolben-Zylinder-Einheiten der Antriebs-Endstufen andererseits relativ zueinander in eine Kuppelstellung bewegt, in welcher die Antriebsverbindung zwischen dem gemeinsamen Antriebsmotor und den betreffenden Kolben-Zylinder-Einheiten hergestellt werden kann (Patentanspruch 13).

Zu diesem Zweck sind die Kolben-Zylinder-Einheiten der betreffenden Antriebs-Endstufen an einer ersten Tragstruktur und die gemeinsame Antriebs-Vorstufe oder der gemeinsame Antriebs-Vorstufenteil an einer zweiten Tragstruktur vorgesehen. Durch eine Relativbewegung der ersten Tragstruktur und der zweiten Tragstruktur werden die Antriebs-Vorstufe oder der gemeinsame Antriebs-Vorstufenteil einerseits und die Kolben-Zylinder-Einheiten der betreffenden Antriebs-Endstufen andererseits in Positionen bewegt, in welchen eine Antriebsverbindung zwischen dem gemeinsamen Antriebsmotor der Antriebs-Vorstufe und den Kolben-Zylinder-Einheiten der betreffenden Antriebs-Endstufen hergestellt werden kann (Patentanspruch 14). In bevorzugter Ausgestaltung der Erfindung ist die erste Tragstruktur nicht nur mit den Kolben-Zylinder-Einheiten der betreffenden Antriebs-Endstufen sondern darüber hinaus auch mit den von den Kolben-Zylinder-Einheiten betätigten Positionierelementpaaren versehen.

Aus den vorstehend zu Patentanspruch 10 dargelegten Gründen ist es von Vorteil, wenn zur Überführung der ersten Tragstruktur und der zweiten Tragstruktur in die Kuppelstellung(en) die erste Tragstruktur eine Drehbewegung um eine Drehachse ausführt, die vorteilhafterweise durch die von den Positionierelementpaaren definierten Positionierzentren der Positioniervorrichtung verläuft (Patentanspruch 15). In Abhängigkeit von der Anordnung der Positionierelementpaare längs der Drehachse der ersten Tragstruktur können die Positionierzentren der Positionierelementpaare in einem gemeinsamen Positionierzentrum miteinander zusammenfallen oder längs der Drehachse der ersten Tragstruktur gegeneinander versetzt sein.

Nachstehend wird die Erfindung anhand beispielhafter schematischer Darstellungen näher erläutert. Es zeigen:
- Figur 1: eine Werkstück-Positioniervorrichtung einer Rohrbearbeitungsmaschine mit einem Spannfutter im Ausgangszustand und einem zweistufigen Stellantrieb für das Spannfutter bei abgekuppeltem Antriebsmotor einer Vorstufe des Stellantriebes,
- Figuren 2 bis 4: verschiedene Ansichten der Werkstück-Positioniervorrichtung gemäß Figur 1,
- Figuren 5, 6: die Werkstück-Positioniervorrichtung gemäß den Figuren 1 bis 4 mit angekuppeltem Antriebsmotor der Vorstufe des Stellantriebes und
- Figuren 7 bis 9: die Werkstück-Positioniervorrichtung gemäß den Figuren 1 bis 6 mit voreingestelltem Spannfutter und angekuppeltem Antriebsmotor der Vorstufe des Stellantriebes.

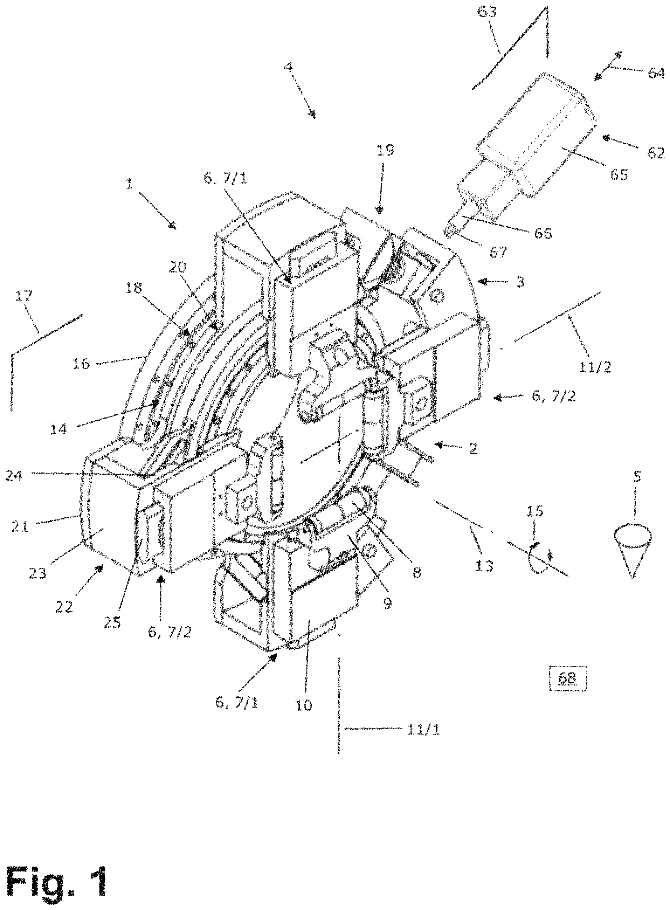

Gemäß Figur 1 umfasst eine Positioniervorrichtung 1 ein Spannfutter 2 sowie einen hierfür vorgesehenen zweistufigen Stellantrieb 3. Die Positioniervorrichtung 1 ist Teil einer Werkzeugmaschine 4 für die Rohrbearbeitung und dient zur Positionierung nicht dargestellter Rohre gegenüber einer Bearbeitungseinrichtung, im dargestellten Beispielsfall gegenüber einem Laserschneidkopf 5 der Werkzeugmaschine 4.

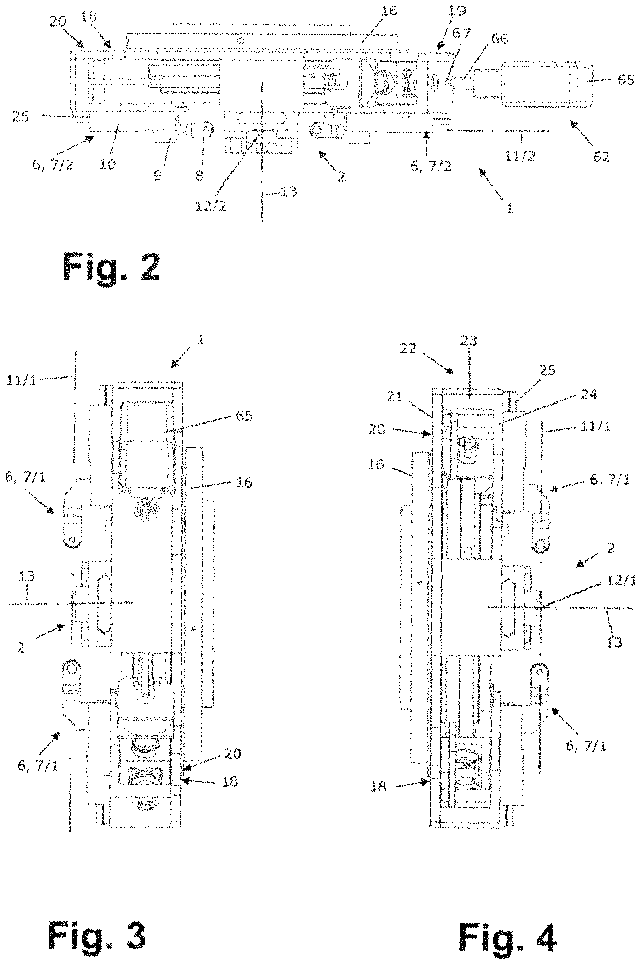

Das Spannfutter 2 ist im vorliegenden Fall als Vierbackenfutter ausgeführt und umfasst als Positionierelemente vier Spannbacken 6, die einander paarweise gegenüberliegen und Positionierelementpaare in Form von Spannbackenpaaren 7/1, 7/2 bilden. Jede der Spannbacken 6 weist einen rollenartigen Spannkörper 8, einen diesen drehbar lagernden Spannkörperhalter 9 sowie einen Führungsschlitten 10 auf. Mittels des Stellantriebes 3 sind die Spannbacken 6 des Spannbackenpaares 7/1 relativ zueinander längs einer Positionierachse 11/1 und die Spannbacken 6 des Spannbackenpaares 7/2 relativ zueinander längs einer Positionierachse 11/2 bewegbar. Das Zentrum der Bewegung der Spannbacken 6 des Spannbackenpaares 7/1 längs der Positionierachse 11/1 bildet ein Positionierzentrum 12/1 des Spannbackenpaares 7/1, das Zentrum der Bewegung der Spannbacken 6 des Spannbackenpaares 7/2 längs der Positionierachse 11/2 ein Positionierzentrum 12/2 des Spannbackenpaares 7/2 (Figuren 2, 4). Durch die Positionierzentren 12/1, 12/2 verläuft senkrecht zu den Positionierachsen 11/1, 11/2 eine Drehachse 13, um welche eine Dreheinheit 14 der Positioniervorrichtung 1 in einer durch einen Doppelpfeil 15 veranschaulichten Drehrichtung drehbar ist. Längs der Drehachse 13 sind die Spannbackenpaare 7/1, 7/2 und deren Positionierachsen 11/1, 11/2 gegeneinander versetzt.

Die Dreheinheit 14 ist um die Drehachse 13 drehbar an einer Grundplatte 16 gelagert, die ihrerseits mit einem in Figur 1 angedeuteten Vorschubwagen 17 der Werkzeugmaschine 4 verschraubt ist. Gemeinsam mit der Dreheinheit 14 verfährt der Vorschubwagen 17 längs der Drehachse 13, um ein mittels des Spannfutters 2 fixiertes Rohr in Richtung der Drehachse 13 gegenüber dem Laserschneidkopf 5 der Werkzeugmaschine 4 zu positionieren.

Die Dreheinheit 14 weist eine erste Tragstruktur 18 auf. An dieser sind das Spannfutter 2 und ein abtriebsseitiger Teil 19 des Stellantriebes 3 montiert. Zur Anbringung des Spannfutters 2 ist eine Tragplatte 20 der ersten Tragstruktur 18 an insgesamt vier radialen Führungsansätzen 21 mit jeweils einem Führungswinkel 22 versehen. Jeder der Führungswinkel 22 besitzt einen parallel zu der Drehachse 13 verlaufenden Befestigungsschenkel 23 sowie einen sich senkrecht dazu erstreckenden Führungsschenkel 24. Der Führungsschenkel 24 ist mit einer Führungsplatte 25 versehen, auf welcher eine Spannbacke 6 längs der Positionierachse 11/1 oder längs der Positionierachse 11/2 beweglich aufsitzt.

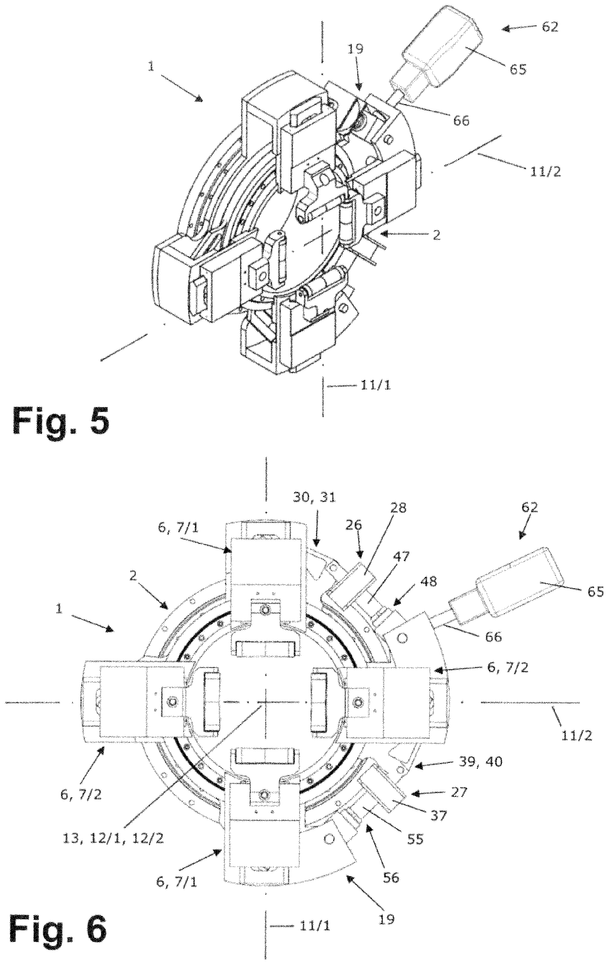

Der abtriebsseitige Teil 19 des Stellantriebes 3 umfasst eine dem Spannbackenpaar 7/1 zugeordnete erste Kolben-Zylinder-Einheit 26 sowie eine dem Spannbackenpaar 7/2 zugeordnete zweite Kolben-Zylinder-Einheit 27 (Figuren 6 bis 8). Beide Kolben-Zylinder-Einheiten 26, 27 sind in dem vorliegenden Beispielsfall als pneumatische Kolben-Zylinder-Einheiten ausgeführt. Andere Bauarten sind denkbar.

Die erste Kolben-Zylinder-Einheit 26 weist einen Zylinder 28 auf, in dessen Innern ein nicht dargestellter Kolben beweglich geführt ist. An dem Kolben angebracht ist eine Kolbenstange 29, die mit ihrem aus dem Zylinder 28 herausragenden Ende an einen ersten Stellring 30 angelenkt ist. Der erste Stellring 30 ist an der ersten Tragstruktur 18 konzentrisch mit der Drehachse 13 um diese drehbar gelagert.

Die Anlenkstelle der Kolbenstange 29 befindet sich an einer Kulisse 31 des ersten Stellrings 30. Der Kulisse 31 liegt an dem Stellring 30 eine Kulisse 32 diametral gegenüber. Die Kulisse 31 weist einen stellringseitigen Kulissenschlitz 33, die Kulisse 32 einen stellringseitigen Kulissenschlitz 34 auf. In dem Kulissenschlitz 33 ist ein Steuerzapfen 35, in dem Kulissenschlitz 34 ein Steuerzapfen 36 zwangsgeführt. Der Steuerzapfen 35 ist an dem in Figur 1 oberen Führungsschlitten 10, der Steuerzapfen 35 an dem in Figur 1 unteren Führungsschlitten 10 des Spannbackenpaares 7/1 angebracht.

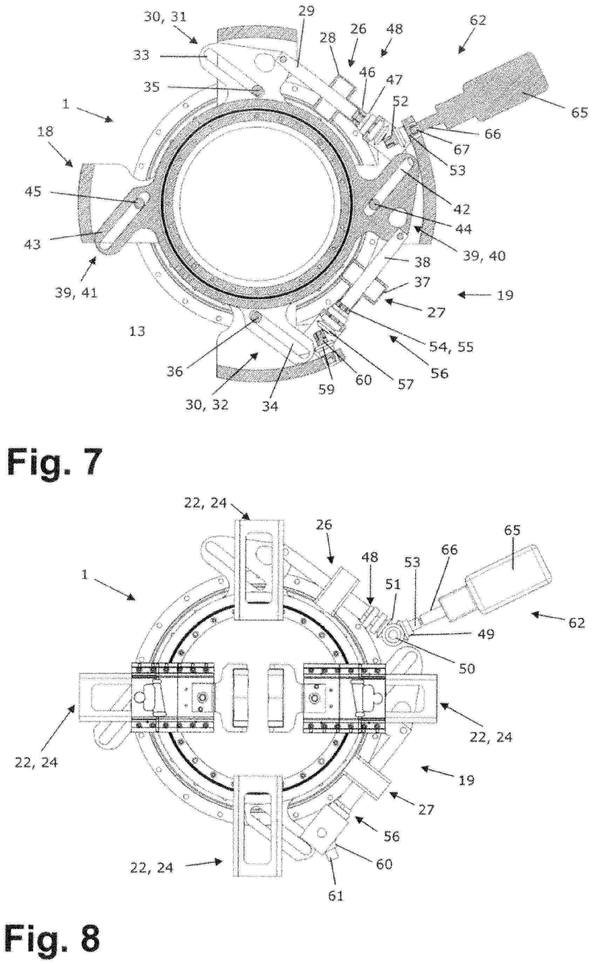

Die zweite Kolben-Zylinder-Einheit 27 umfasst einen Zylinder 37, in dessen Innern ein mit einer Kolbenstange 38 versehener Kolben beweglich geführt ist. Die Kolbenstange 38 ist an einem zweiten Stellring 39 angelenkt, der Kulissen 40, 41 aufweist. In einen Kulissenschlitz 42 der Kulisse 40 greift ein Steuerzapfen 44 ein; im Innern eines Kulissenschlitzes 43 der Kulisse 41 ist ein Steuerzapfen 45 zwangsgeführt. Der Steuerzapfen 44 befindet sich an der Rückseite des in Figur 1 rechten Führungsschlittens 10 des Spannbackenpaares 7/2; der Steuerzapfen 45 ist an der Rückseite des in Figur 1 linken Führungsschlittens 10 des Spannbackenpaares 7/2 angebracht. In Figur 7 ist der zweite Stellring 39 im Einzelnen zu erkennen. Der erste Stellring 30 ist damit baugleich, gegenüber der Darstellungsebene von Figur 7 aber längs der Drehachse 13 von dem Betrachter weg versetzt.

Der Zylinder 28 der ersten Kolben-Zylinder-Einheit 26 ist an der von der Kulisse 31 abliegenden Seite mit einer Spindelmutter 46 versehen, in weiche eine Gewindespindel 47 eingreift, die gemeinsam mit der Spindelmutter 46 einen ersten als Kugelgewindetrieb ausgeführten Spindeltrieb 48 bildet. Die Gewindespindel 47 des ersten Spindeltriebs 48 ist an der ersten Tragstruktur 18 drehbar gelagert. Auf dem von der Spindelmutter 46 abliegenden Ende der Gewindespindel 47 sitzt ein Kegelzahnrad 51 drehfest auf. Das Kegelzahnrad 51 kämmt mit einem gleichfalls an der ersten Tragstruktur 18 drehbar gelagerten Kegelzahnrad 50 und dieses wiederum mit einem an der ersten Tragstruktur 18 drehbar gelagerten weiteren Kegelzahnrad 49 (Figur 8). Das Kegelzahnrad 49 sitzt drehfest auf einem Wellenabschnitt 52 auf, dessen von dem ersten Spindeltrieb 48 abliegendes Ende eine innenverzahnte Kupplungshülse 53 ausbildet.

In entsprechender Weise greift in eine Spindelmutter 54 an dem Zylinder 37 der zweiten Kolben-Zylinder-Einheit 27 eine Gewindespindel 55 ein, die gemeinsam mit der Spindelmutter 54 einen Kugelgewindetrieb in Form eines zweiten Spindeltriebs 56 bildet. Auf der Gewindespindel 55 sitzt ein Kegelzahnrad 57, das mit einem in den Abbildungen nicht gezeigten Kegelzahnrad kämmt. Dieses Kegelzahnrad befindet sich im Eingriff mit einem weiteren Kegelzahnrad 59, das seinerseits auf einem Wellenabschnitt 60 aufsitzt. Der Wellenabschnitt 60 ist an seinem von dem zweiten Spindeltrieb 56 abliegenden Ende als innenverzahnte Kupplungshülse 61 ausgebildet.

Sowohl die innenverzahnte Kupplungshülse 53 an dem Wellenabschnitt 52 als auch die innenverzahnte Kupplungshülse 61 an dem Wellenabschnitt 60 bildet ein Kupplungselement einer lösbaren Kupplung, mittels derer eine Antriebsverbindung zwischen dem abtriebsseitigen Teil 19 des Stellantriebes 3 einerseits und einem antriebsseitigen Teil 62 des Stellantriebes 3 andererseits hergestellt werden kann.

Der antriebsseitige Teil 62 des Stellantriebes 3 ist an einer stationären zweiten Tragstruktur 63 montiert, die in Figur 1 andeutungsweise dargestellt ist. An der zweiten Tragstruktur 63 ist der antriebsseitige Teil 62 des Stellantriebes 3 in Richtung eines Doppelpfeils 64 bewegbar geführt. Zur Bewegung des antriebsseitigen Teils 62 des Stellantriebes 3 in Richtung des Doppelpfeils 64 dient ein motorischer Antrieb herkömmlicher Bauart, welcher der Einfachheit halber nicht dargestellt ist.

Der antriebsseitige Teil 62 des Stellantriebes 3 umfasst einen geregelten elektrischen Antriebsmotor 65 mit einer Motorwelle 66. Das freie Ende der Motorwelle 66 ist als außenverzahnter Kupplungszapfen 67 ausgebildet, dem wahlweise die innenverzahnte Kupplungshülse 53 an dem Wellenabschnitt 52 oder die innenverzahnte Kupplungshülse 61 an dem Wellenabschnitt 60 des abtriebsseitigen Teils 19 des Stellantriebes 3 zugeordnet werden kann und der gemeinsam mit den innenverzahnten Kupplungshülsen 53, 61 die lösbare Kupplung zwischen dem antriebsseitigen Teil 62 und dem abtriebsseitigen Teil 19 des Stellantriebes 3 bildet.

Sämtliche Funktionen der Positioniervorrichtung 1 sind numerisch gesteuert. Eine entsprechende Steuereinheit der Positioniervorrichtung 1 ist in eine in Figur 1 stark schematisch dargestellte numerische Maschinensteuerung 68 der Werkzeugmaschine 4 integriert. Teil der Steuereinheit für die Positioniervorrichtung 1 ist ein nicht gezeigtes Wegmesssystem, mittels dessen die Positionen der Spannbacken 6 längs der Positionierachsen 11/1, 11/2 bestimmt werden können. Das Wegmesssystem ist herkömmlicher Bauart und misst an den Führungsschlitten 10 der Spannbacken 6 und an den mit den Führungsschlitten 10 versehenen Führungsplatten 25 der ersten Tragstruktur 18 die Positionen, welche die Spannbacken 6 im Koordinatensystem der numerischen Maschinensteuerung 68 längs der Positionierachsen 11/1, 11/2 einnehmen.

Für das Positionieren eines Rohres mittels der Positioniervorrichtung 1 definiert die Maschinensteuerung 68 in Abhängigkeit von der Rohrgeometrie und von der sonstigen Beschaffenheit des zu positionierenden Rohres eine Funktionsstellung der Spannbacken 6 des Spannbackenpaares 7/1 und eine Funktionsstellung der Spannbacken 6 des Spannbackenpaares 7/2. Dabei sind die Funktionsstellungen der Spannbacken 6 der Spannbackenpaare 7/1, 7/2 davon abhängig, ob und gegebenenfalls in welchem Ausmaß das positionierte Rohr durch die in die Funktionsstellungen bewegten Spannbacken 6 längs der Positionierachsen 11/1, 11/2 kraftbeaufschlagt werden soll. Der Betrag, den die von den Spannbacken 6 auf das Rohr ausgeübte Kraft annehmen darf, hängt insbesondere von der Verformbarkeit und diese wiederum von der Wandstärke des Rohres ab. An einem dünnwandigen Rohr müssen die Spannbacken 6 zur Vermeidung unerwünschter Verformungen kraftlos oder zumindest annähernd kraftlos anliegen. Im Falle von Rohren mit verhältnismäßig großer Wandstärke und einer daraus resultierenden großen Steifigkeit der Rohrwand ist eine wesentlich stärkere Beaufschlagung des Rohres durch die paarweise einander gegenüberliegenden Spannbacken 6 zulässig.

In jedem Fall fahren die Spannbacken 6 der Spannbackenpaare 7/1, 7/2 ihre Funktionsstellungen ausgehend von einer bei geöffnetem Spannfutter 2 eingenommenen Ausgangsstellung (Figur 1) mit einer zweiteiligen Bewegung an. Der erste Teil der Spannbackenbewegung wird ausgeführt, indem eine Antriebs-Vorstufe 69 des Stellantriebes 3 die erste Kolben-Zylinder-Einheit 26 und die zweite Kolben-Zylinder-Einheit 27 nacheinander aus einer der jeweiligen Ausgangsstellung der Spannbacken 6 zugeordneten Anfangsposition in eine Antriebsposition zustellt, bei welcher die Spannbacken 6 des Spannbackenpaares 7/1 und die Spannbacken 6 des Spannbackenpaares 7/2 jeweils eine Zwischenstellung einnehmen. Anschließend sorgen eine für das Spannbackenpaar 7/1 vorgesehene Antriebs-Endstufe 70 und eine für das Spannbackenpaar 7/2 vorgesehene Antriebs-Endstufe 71 des Stellantriebes 3 dafür, dass die Spannbacken 6 der Spannbackenpaare 7/1, 7/2 von der jeweiligen Zwischenstellung in die jeweilige Funktionsstellung gelangen. Ausgehend von ihrer Zwischenstellung sind die Spannbacken 6 zur Überführung in ihre Funktionsstellungen lediglich noch über eine kurze Distanz zu bewegen.

Die Antriebs-Vorstufe 69 des Stellantriebes 3 weist für die Spannbackenpaare 7/1, 7/2 jeweils einen geregelten motorischen Spindelantrieb auf, wobei der geregelte motorische Spindelantrieb für das Spannbackenpaar 7/1 den geregelten elektrischen Antriebsmotor 65 und den ersten Spindeltrieb 48 und der geregelte motorische Spindelantrieb für das Spannbackenpaar 7/2 den geregelten elektrischen Antriebsmotor 65 und den zweiten Spindeltrieb 56 umfasst. Der geregelte elektrische Antriebsmotor 65, dessen Motorwelle 66 und der daran ausgebildete außenverzahnte Kupplungszapfen 67 und mithin der antriebsseitige Teil 62 des Stellantriebes 3 bilden einen gemeinsamen Antriebs-Vorstufenteil für die beiden Spannbackenpaare 7/1, 7/2.

Die für das Spannbackenpaar 7/1 vorgesehene Antriebs-Endstufe 70 umfasst die erste Kolben-Zylinder-Einheit 26 sowie die Getriebeelemente zwischen der ersten Kolben-Zylinder-Einheit 26 und den Spannbacken 6 des Spannbackenpaares 7/1. Der erste Stellring 30 stellt dabei eine Antriebsverbindung zwischen der ersten Kolben-Zylinder-Einheit 26 und beiden Spannbacken 6 des Spannbackenpaares 7/1 her und bildet folglich ein beiden Spannbacken 6 des Spannbackenpaares 7/1 gemeinsames Getriebeelement.

Entsprechend ist die Antriebs-Endstufe 71 für das Spannbackenpaar 7/2 ausgebildet. Ein Getriebe mit dem zweiten Stellring 39 als gemeinsames Getriebeelement stellt eine Antriebsverbindung her zwischen der als Antriebsvorrichtung der Antriebs-Endstufe 71 vorgesehenen zweiten Kolben-Zylinder-Einheit 27 und den Spannbacken 6 des Spannbackenpaares 7/2.

Zur Bewegung der Spannbacken 6 der Spannbackenpaare 7/1, 7/2 aus der Anfangsstellung in die Zwischenstellung verfährt zunächst der Vorschubwagen 17 mit der Dreheinheit 14 längs der Drehachse 13 in eine Position, in welcher die Dreheinheit 14 mit dem abtriebsseitigen Teil 19 des Stellantriebes 3 auf Höhe des antriebsseitigen Teils 62 des Stellantriebes 3 angeordnet ist. Anschließend wird die Dreheinheit 14 um die Drehachse 13 derart zugestellt, dass der abtriebsseitige Teil 19 des Stellantriebes 3 mit der an dem Wellenabschnitt 52 vorgesehenen innenverzahnten Kupplungshülse 53 in axialer Verlängerung des außenverzahnten Kupplungszapfens 67 an der Motorwelle 66 des antriebsseitigen Teils 62 des Stellantriebes 3 zu liegen kommt. Die an der ersten Tragstruktur 18 vorgesehene erste Kolben-Zylinder-Einheit 26 und der antriebsseitige Teil 62 des Stellantriebes 3 befinden sich damit in einer Kuppelstellung. In dieser Betriebsphase ist die Positioniervorrichtung 1 in den Figuren 1 bis 4 dargestellt.

Ausgehend von diesen Verhältnissen wird der antriebsseitige Teil 62 des Stellantriebes 3 entlang der zweiten Tragstruktur 63 zu der ersten Tragstruktur 18 hin bewegt, bis der außenverzahnte Kupplungszapfen 67 an der Motorwelle 66 in die innenverzahnte Kupplungshülse 53 an dem Wellenabschnitt 52 eintaucht. Damit ist eine Antriebsverbindung zwischen dem elektrischen Antriebsmotor 65 der Antriebs-Vorstufe 69 und der ersten Kolben-Zylinder-Einheit 26 der Antriebs-Endstufe 70 des Stellantriebes 3 hergestellt (Figuren 5, 6).

Aufgrund dieser Antriebsverbindung kann die erste Kolben-Zylinder-Einheit 26 mittels des elektrischen Antriebsmotors 65 aus der Anfangsposition in die Antriebsposition zugestellt werden. Damit einher geht eine Zustellung der mit der ersten Kolben-Zylinder-Einheit 26 über den ersten Stellring 30 bewegungsverbundenen Spannbacken 6 des Spannbackenpaares 7/1 aus der Ausgangsstellung in die Zwischenstellung.

Die Ausführung dieses ersten Teils der Spannbackenbewegung hängt im Einzelnen von dem jeweiligen Anwendungsfall ab.

Ist ein Rohr zu positionieren, das beispielsweise aufgrund einer entsprechenden Wandstärke durch die in die Funktionsstellung bewegten Spannbacken 6 des Spannbackenpaares 7/1 auch dann nicht verformt wird, wenn die Spannbacken 6 die Rohrwand mit einer verhältnismäßig großen Kraft beaufschlagen oder ist eine verhältnismäßig starke Beaufschlagung des positionierten Rohres durch die in der Funktionsstellung befindlichen Spannbacken 6 des Spannbackenpaares 7/1 erwünscht, so wird die erste Kolben-Zylinder-Einheit 26 mittels des elektrischen Antriebsmotors 65 in eine Antriebsposition bewegt, bei welcher die mit der ersten Kolben-Zylinder-Einheit 26 bewegungs- und antriebsverbundenen Spannbacken 6 des Spannbackenpaares 7/1 eine Zwischenstellung einnehmen, von der ausgehend die Spannbacken 6 des Spannbackenpaares 7/1 aufgrund eines maximalen Antriebshubs, welchen die in die Antriebsposition zugestellte erste Kolben-Zylinder-Einheit 26 zur Bewegung der Spannbacken 6 des Spannbackenpaares 7/1 aus der Zwischenstellung in die Funktionsstellung ausführt, in eine Stellung gelangen würden, in welcher der Abstand der Spannbacken 6 des Spannbackenpaares 7/1 längs der Positionierachse 11/1 deutlich kleiner wäre als die Abmessung des zu positionierenden Rohres in Richtung der Positionierachse 11/1.

Der maximale Antriebshub der ersten Kolben-Zylinder-Einheit 26 ist konstruktiv bedingt und daher eindeutig definiert. Der Betrag der mit dem maximalen Antriebshub der ersten Kolben-Zylinder-Einheit 26 verbundenen Bewegung der Spannbacken 6 des Spannbackenpaares 7/1 längs der Positionierachse 11/1 ist bekannt und in der Maschinensteuerung 68 der Werkzeugmaschine 4 hinterlegt. Die Abmessungen des zu positionierenden Rohres, insbesondere dessen Querschnittsabmessungen, werden vor Beginn des Positioniervorgangs in die Maschinensteuerung 68 eingegeben. Mittels des Wegmesssystems für die Spannbacken 6 des Spannbackenpaares 7/1 wird sichergestellt, dass die Spannbacken 6 des Spannbackenpaares 7/1 durch den elektrischen Antriebsmotor 65 der Antriebs-Vorstufe 69 des Stellantriebes 3 tatsächlich in die unter den gegebenen Randbedingungen anzufahrende Zwischenstellung zugestellt werden.

Da der Abstand der Spannbacken 6 des Spannbackenpaares 7/1 nach dem die Spannbackenbewegung abschließenden maximalen Antriebshub der ersten Kolben-Zylinder-Einheit 26 längs der Positionierachse 11/1 deutlich kleiner wäre als die Abmessung des zu positionierenden Rohres in Richtung der Positionierachse 11/1, können die Antriebsposition der ersten Kolben-Zylinder-Einheit 26 und die damit verbundene Zwischenstellung der Spannbacken 6 des Spannbackenpaares 7/1 mit einer verhältnismäßig großen Toleranz eingestellt werden. Die Stellung, welche die Spannbacken 6 am Ende der mittels der ersten Kolben-Zylinder-Einheit 26 bewirkten abschließenden Bewegung aufgrund des maximalen Antriebshubs der ersten Kolben-Zylinder-Einheit 26 einnehmen würde, darf in verhältnismäßig weiten Grenzen variieren, ohne dass dadurch eine wirksame Positionierung des zu positionierenden Rohres in Frage gestellt wäre.

Zur Bewegung der ersten Kolben-Zylinder-Einheit 26 aus der Anfangs- in die Antriebsposition und der Spannbacken 6 des Spannbackenpaares 7/1 aus der Ausgangs- in die Zwischenstellung wird in Fällen der genannten Art nach dem Herstellen der Antriebsverbindung zwischen dem elektrischen Antriebsmotor 65 und der ersten Kolben-Zylinder-Einheit 26 der elektrische Antriebsmotor 65 eingeschaltet. Der elektrische Antriebsmotor 65 treibt dann über die Motorwelle 66, den Wellenabschnitt 52 und das von den Kegelzahnrädern 49, 50, 51 gebildete Umlenkgetriebe die Gewindespindel 47 des ersten Spindeltriebs 48 um die Spindeldrehachse an. Bei entsprechender Drehrichtung des elektrischen Antriebsmotors 65 treibt die Getriebespindel 47 im Zusammenwirken mit der Spindelmutter 46 des ersten Spindeltriebs 48 den Zylinder 28 und mit diesem die gesamte ersten Kolben-Zylinder-Einheit 26 mit einer von dem elektrischen Antriebsmotor 65 weg gerichteten Bewegung an.

Aufgrund der mittels des elektrischen Antriebsmotors 65 bewirkten Bewegung der ersten Kolben-Zylinder-Einheit 26 wird der an die Kolbenstange 29 der ersten Kolben-Zylinder-Einheit 26 angebundene erste Stellring 30 um die Drehachse 13 gedreht. Infolge der Drehung des ersten Stellrings 30 um die Drehachse 13 verlagert sich sowohl der in dem Kulissenschlitz 33 der Kulisse 31 geführte Steuerzapfen 35 als auch der in dem Kulissenschlitz 34 der Kulisse 32 geführte Steuerzapfen 36 in Richtung auf die Drehachse 13 bzw. auf das Positionierzentrum 12/1 des Spannbackenpaares 7/1. Mit der Bewegung der Steuerzapfen 35, 36 ist eine Bewegung der mit den Steuerzapfen 35, 36 versehenen Spannbacken 6 des Spannbackenpaares 7/1 in Richtung auf die Drehachse 13 bzw. das Positionierzentrum 12/1 verbunden. Die Spannbacken 6 des Spannbackenpaares 7/1 werden dabei von ihren Führungsschlitten 10 und den betreffenden Führungsplatten 25 der ersten Tragstruktur 18 auf einer geradlinigen Bewegungsbahn geführt. Der elektrische Antriebsmotor 65 wird stillgesetzt, sobald mittels des Wegmesssystems festgestellt wird, dass die Spannbacken 6 des Spannbackenpaares 7/1 längs der Positionierachse 11/1 die anzufahrende Zwischenstellung erreicht haben.

Ist abweichend von dem vorstehenden Anwendungsfall das zu positionierende Rohr etwa aufgrund einer geringen Wandstärke leicht verformbar, so wird die erste Kolben-Zylinder-Einheit 26 noch vor der Zustellung in die Antriebsposition mit ihrem maximalen Antriebshub betätigt. Die über den ersten Stellring 30 an die erste Kolben-Zylinder-Einheit 26 angebundenen Spannbacken 6 des Spannbackenpaares 7/1 bewegen sich folglich aus ihrer Ausgangsstellung längs der Positionierachse 11/1 in Richtung auf die Drehachse 13 bzw. das Positionierzentrum 12/1. Bei maximal ausgefahrener Kolbenstange 29 wird anschließend die erste Kolben-Zylinder-Einheit 26 durch den elektrischen Antriebsmotor 65 feinfühlig bewegt, bis mit Hilfe des Wegmesssystems festgestellt wird, dass der Abstand der sich längs der Positionierachse 11/1 gegenüberliegenden Spannbacken 6 des Spannbackenpaares 7/1 exakt der Abmessung des zu positionierenden Rohres längs der Positionierachse 11/1 entspricht oder allenfalls geringfügig kleiner ist. Damit ist die Antriebsposition der ersten Kolben-Zylinder-Einheit 26 ermittelt.

Anschließend wird die erste Kolben-Zylinder-Einheit 26 erneut betätigt und die Kolbenstange 29 wird maximal in den Zylinder 28 zurückgezogen. Damit verbunden ist eine gegenläufige Bewegung der Spannbacken 6 des Spannbackenpaares 7/1, die sich voneinander weg bewegen. Die von den Spannbacken 6 des Spannbackenpaares 7/1 am Ende dieser Bewegung eingenommene Stellung ist die Zwischenstellung, von der ausgehend die Spannbacken 6 des Spannbackenpaares 7/1 beim späteren Betrieb der Positioniervorrichtung 1 zum abschließenden Positionieren eines Rohres durch den maximalen Antriebshub der ersten Kolben-Zylinder-Einheit 26 in die Funktionsstellung überführt werden.

Aufgrund der beschriebenen Einstellung ihrer Zwischenposition liegen die Spannbacken 6 des Spannbackenpaares 7/1 in der Funktionsstellung kraftlos oder annähernd kraftlos an der Außenseite des zu positionierenden Rohres an. Eine unerwünschte Deformierung des positionierten Rohres durch das Spannbackenpaar 7/1 ist folglich ausgeschlossen.

An die Bewegung der Spannbacken 6 des Spannbackenpaares 7/1 in die Zwischenstellung schließt sich eine entsprechende Voreinstellung der Spannbacken 6 des Spannbackenpaares 7/2 an. Zu diesem Zweck ist ausgehend von den Verhältnissen gemäß den Figuren 5 und 6 der antriebsseitige Teil 62 des Stellantriebes 3 an der zweiten Tragstruktur 63 zurück in die Position gemäß Figur 1 zu bewegen und dadurch die Antriebsverbindung zwischen dem elektrischen Antriebsmotor 65 und der ersten Kolben-Zylinder-Einheit 26 zu lösen. Anschließend wird die Dreheinheit 14 so weit um die Drehachse 13 zugestellt, bis die innenverzahnte Kupplungshülse 61 an dem Wellenabschnitt 60 des abtriebsseitigen Teils 19 des Stellantriebes 3 in axialer Verlängerung des außenverzahnten Kupplungszapfens 67 an der Motorwelle 66 des antriebsseitigen Teils 62 des Stellantriebes 3 zu liegen kommt. Durch eine Bewegung des antriebsseitigen Teils 62 des Stellantriebes 3 längs der zweiten Tragstruktur 63 wird der elektrische Antriebsmotor 65 an die zweite Kolben-Zylinder-Einheit 27 angekuppelt. Auf die vorstehend für die Spannbacken 6 des Spannbackenpaares 7/1 beschriebene Art und Weise werden dann die Spannbacken 6 des Spannbackenpaares 7/2 in Abhängigkeit von dem jeweiligen Anwendungsfall in die Zwischenstellung bewegt.

Selbstverständlich ist es auch möglich, zunächst die Spannbacken 6 des Spannbackenpaares 7/2 und anschließend die Spannbacken 6 des Spannbackenpaares 7/1 in die Zwischenstellung zu überführen. Diese Vorgehensweise ist in den Figuren 7 bis 9 veranschaulich.

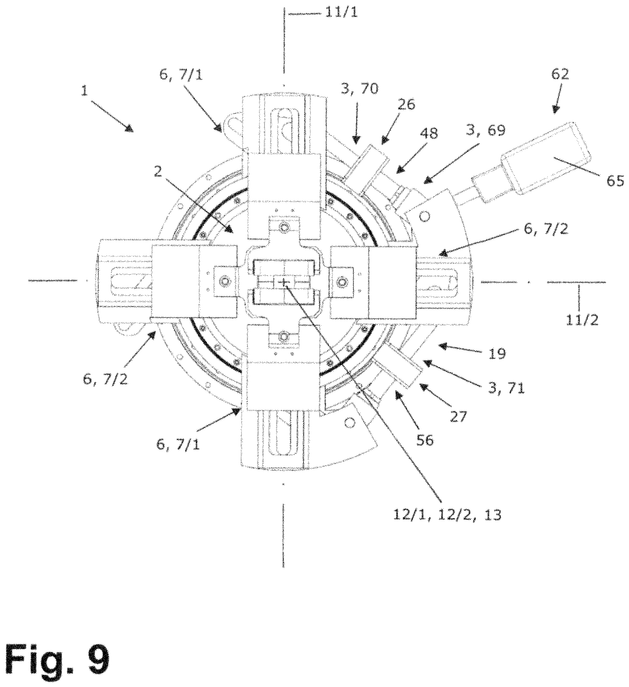

In jedem Fall ergibt sich nach dem Bewegen der Spannbacken 6 beider Spannbackenpaare 7/1, 7/2 in die Zwischenstellung der in Figur 9 dargestellte Funktionszustand der Positioniervorrichtung 1. Die einander gegenüberliegenden Spannbacken 6 der Spannbackenpaare 7/1, 7/2 müssen jeweils lediglich noch kurze Hübe längs der Positionierachse 11/1 oder längs der Positionierachse 11/2 ausführen, um in ihre Funktionsstellungen zu gelangen und dadurch das zu positionierende Werkstück zweiachsig festzulegen. Diese kurzen Hübe der Spannbacken 6 der Spannbackenpaare 7/1, 7/2 werden durch die maximalen Antriebshübe der ersten Kolben-Zylinder-Einheit 26 und der zweiten Kolben-Zylinder-E inheit 27 erzeugt.

## Patentansprüche

1. Positioniervorrichtung zum Positionieren von Werkstücken gegenüber einer Bearbeitungseinrichtung (5) einer Werkzeugmaschine (4), mit zwei einander gegenüberliegenden Positionierelementen (6) und mit einem Stellantrieb (3), mittels dessen wenigstens ein Positionierelement (6) relativ zu dem anderen Positionierelement (6) bewegbar ist und mittels dessen dadurch die Positionierelemente (6) relativ zueinander in eine Funktionsstellung aufeinander zu bewegbar sind, in welcher die Positionierelemente (6) bei Anordnung eines Werkstücks zwischen den Positionierelementen (6) einander gegenüberliegend an der Außenseite des Werkstücks anliegen und das Werkstück in Richtung einer durch die in die Funktionsstellung bewegten Positionierelemente (6) definierten Positionierachse (11/1, 11/2) festlegen,
• wobei der Stellantrieb (3) zweistufig ausgebildet ist und eine Antriebs-Vorstufe (69) mit einer Antriebsvorrichtung und eine Antriebs-Endstufe (70, 71) mit einer Kolben-Zylinder-Einheit (26, 27) umfasst, die mit den Positionierelementen (6) antriebsverbunden ist und
• wobei die Antriebsvorrichtung der Antriebs-Vorstufe (69) die Positionierelemente (6) relativ zueinander aus einer Ausgangsstellung in eine Zwischenstellung bewegt, von der ausgehend die Kolben-Zylinder-Einheit (26, 27) der Antriebs-Endstufe (70, 71) die Positionierelemente (6) relativ zueinander in die Funktionsstellung aufeinander zu bewegt,
**dadurch gekennzeichnet,**
**dass** die Kolben-Zylinder-Einheit (26, 27) der Antriebs-Endstufe (70, 71) mit den mit der Kolben-Zylinder-Einheit (26, 27) der Antriebs-Endstufe (70, 71) antriebsverbundenen Positionierelementen (6) auch bewegungsverbunden ist und
**dass** die Antriebsvorrichtung der Antriebs-Vorstufe (69) einen geregelten motorischen Spindelantrieb umfasst, der einen Antriebsmotor (65) und einen Spindeltrieb (48, 56) aufweist, über welchen der Antriebsmotor (65) des motorischen Spindelantriebs der Antriebs-Vorstufe (69) mit der Kolben-Zylinder-Einheit (26, 27) der Antriebs-Endstufe (70, 71) antriebsverbunden ist, wobei der motorische Spindelantrieb der Antriebs-Vorstufe (69) die Kolben-Zylinder-Einheit (26, 27) der Antriebs-Endstufe (70, 71) in eine Antriebsposition zustellt, welcher die Zwischenstellung der Positionierelemente (6) zugeordnet ist und wobei die in die Antriebsposition zugestellte Kolben-Zylinder-Einheit (26, 27) der Antriebs-Endstufe (70, 71) die Positionierelemente (6) ausgehend von der Zwischenstellung relativ zueinander in die Funktionsstellung aufeinander zu bewegt.

2. Positioniervorrichtung nach Anspruch 1, **dadurch gekennzeichnet, dass** die in die Antriebsposition zugestellte Kolben-Zylinder-Einheit (26, 27) der Antriebs-Endstufe (70, 71) die Positionierelemente (6) mit einem baulich definierten Antriebshub, insbesondere mit einem baulich definierten maximalen Antriebshub, relativ zueinander ausgehend von der Zwischenstellung in die Funktionsstellung aufeinander zu bewegt.

3. Positioniervorrichtung nach einem der vorhergehenden Ansprüche, **dadurch gekennzeichnet, dass** der motorische Spindelantrieb der Antriebs-Vorstufe (69) als Antriebsmotor (65) einen geregelten Elektromotor und/oder als Spindeltrieb (48, 56) einen Kugelgewindetrieb umfasst.

4. Positioniervorrichtung nach einem der vorhergehenden Ansprüche, **dadurch gekennzeichnet, dass** der motorische Spindelantrieb der Antriebs-Vorstufe (69) an dem Zylinder (28, 37) der Kolben-Zylinder-Einheit (26, 27) der Antriebs-Endstufe (70, 71) mit der Kolben-Zylinder-Einheit (26, 27) der Antriebs-Endstufe (70, 71) antriebsverbunden ist.

5. Positioniervorrichtung nach einem der vorhergehenden Ansprüche, **dadurch gekennzeichnet, dass** die Kolben-Zylinder-Einheit (26, 27) der Antriebs-Endstufe (70, 71) mit beiden Positionierelementen (6) bewegungsverbunden ist.

6. Positioniervorrichtung nach einem der vorhergehenden Ansprüche, **dadurch gekennzeichnet, dass** die in die Antriebsposition zugestellte Kolben-Zylinder-Einheit (26, 27) der Antriebs-Endstufe (70, 71) über ein gemeinsames Getriebeelement (30, 39) mit beiden Positionierelementen (6) antriebsverbunden ist und mittels des gemeinsamen Getriebeelementes (30, 39) zur Bewegung der Positionierelemente (6) von der Zwischenstellung in die Funktionsstellung beide Positionierelemente (6) bewegt.

7. Positioniervorrichtung nach einem der vorhergehenden Ansprüche, **dadurch gekennzeichnet, dass** zwischen dem Antriebsmotor (65) der Antriebs-Vorstufe (69) und der Kolben-Zylinder-Einheit (26, 27) der Antriebs-Endstufe (70, 71) eine lösbare Kupplung vorgesehen ist, welche einen den Antriebsmotor (65) der Antriebs-Vorstufe (69) umfassenden antriebsseitigen Teil (62) und einen die Kolben-Zylinder-Einheit (26, 27) der Antriebs-Endstufe (70, 71) umfassenden abtriebsseitigen Teil (19) des Stellantriebes (3) lösbar miteinander verbindet.

8. Positioniervorrichtung nach Anspruch 7, **dadurch gekennzeichnet, dass** der abtriebsseitige Teil (19) des Stellantriebes (3) an einer ersten Tragstruktur (18) und der antriebsseitige Teil (62) des Stellantriebes (3) an einer zweiten Tragstruktur (63) vorgesehen sind und dass die erste Tragstruktur (18) und die zweite Tragstruktur (63) relativ zueinander in eine Kuppelstellung bewegbar sind, in welcher der abtriebsseitige Teil (19) und der antriebsseitige Teil (62) des Stellantriebes (3) zur Herstellung der Antriebsverbindung zwischen dem Antriebsmotor (65) der Antriebsvorstufe (69) und der Kolben-Zylinder-Einheit (26, 27) der Antriebs-Endstufe (70, 71) über die Kupplung lösbar miteinander verbindbar sind.

9. Positioniervorrichtung nach Anspruch 8, **dadurch gekennzeichnet, dass** zusätzlich zu der Kolben-Zylinder-Einheit (26, 27) der Antriebs-Endstufe (70, 71) auch die mit der Kolben-Zylinder-Einheit (26, 27) bewegungsverbundenen und antriebsverbundenen Positionierelemente (6) an der ersten Tragstruktur (18) vorgesehen sind.

10. Positioniervorrichtung nach Anspruch 9, **dadurch gekennzeichnet, dass** die erste Tragstruktur (18) und die zweite Tragstruktur (63) relativ zueinander in eine Kuppelstellung bewegbar sind, indem die erste Tragstruktur (18) um eine Drehachse (13) drehbar ist, welche durch ein Positionierzentrum (12/1, 12/2) verläuft, das von den an der ersten Tragstruktur (18) vorgesehenen Positionierelementen (6) definiert wird.

11. Positioniervorrichtung nach einem der vorhergehenden Ansprüche, **dadurch gekennzeichnet, dass** mehrere Positionierelementpaare (7/1, 7/2) vorgesehen sind, die jeweils aus zwei einander gegenüberliegenden Positionierelementen (6) bestehen und die Positionierachsen (11/1, 11/2) definieren, die in Umfangsrichtung eines von den Positionierelementpaaren (7/1, 7/2) gemeinschaftlich festgelegten Werkstücks gegeneinander versetzt sind und dass ein Stellantrieb (3) vorgesehen ist, der für jedes der Positionierelementpaare (7/1, 7/2) eine Antriebs-Vorstufe (69), die einen geregelten motorischen Spindelantrieb mit einem Antriebmotor (65) und einem Spindeltrieb (48, 56) umfasst und eine Antriebs-Endstufe (70, 71), die eine Kolben-Zylinder-Einheit (26, 27) umfasst, aufweist, wobei der motorische Spindelantrieb der für ein Positionierelementpaar (7/1, 7/2) vorgesehenen Antriebs-Vorstufe (69) die Kolben-Zylinder-Einheit (26, 27) der für das betreffende Positionierelementpaar (7/1, 7/2) vorgesehenen Antriebs-Endstufe (70, 71) in eine Antriebsposition zustellt, welcher die Zwischenstellung der Positionierelemente (6) des betreffenden Positionierelementpaares (7/1, 7/2) zugeordnet ist und wobei die in die Antriebsposition zugestellte Kolben-Zylinder-Einheit (26, 27) der Antriebs-Endstufe (70, 71) für das betreffende Positionierelementpaar (7/1, 7/2) die Positionierelemente (6) dieses Positionierelementpaares (7/1, 7/2) ausgehend von der Zwischenstellung relativ zueinander in die Funktionsstellung aufeinander zu bewegt.

12. Positioniervorrichtung nach Anspruch 11, **dadurch gekennzeichnet, dass** der Stellantrieb (3) für mehrere Positionierelementpaare (7/1, 7/2) eine gemeinsame Antriebs-Vorstufe oder einen gemeinsamen Antriebs-Vorstufenteil mit einem gemeinsamen Antriebsmotor (65) umfasst und dass der gemeinsame Antriebsmotor (65) zur Herstellung einer Antriebsverbindung zwischen dem gemeinsamen Antriebsmotor (65) und den Kolben-Zylinder-Einheiten (26, 27) der für die betreffenden Positionierelementpaare (7/1, 7/2) vorgesehenen Antriebs-Endstufen (70, 71) über eine lösbare Kupplung nacheinander mit den Kolben-Zylinder-Einheiten (26, 27) der für die betreffenden Positionierelementpaare (7/1, 7/2) vorgesehenen Antriebs-Endstufen (70, 71) antriebsverbindbar ist.

13. Positioniervorrichtung nach Anspruch 12, **dadurch gekennzeichnet, dass** die gemeinsame Antriebs-Vorstufe oder der gemeinsame Antriebs-Vorstufenteil einerseits und die betreffenden Kolben-Zylinder-Einheiten (26, 27) der Antriebs-Endstufen (70, 71) andererseits relativ zueinander in eine Kuppelstellung bewegbar sind, in welcher der gemeinsame Antriebsmotor (65) und die betreffenden Kolben-Zylinder-Einheiten (26, 27) der Antriebs-Endstufen (70, 71) über die lösbare Kupplung miteinander antriebsverbindbar sind.

14. Positioniervorrichtung nach Anspruch 13, **dadurch gekennzeichnet, dass** die Kolben-Zylinder-Einheiten (26, 27) der für die betreffenden Positionierelementpaare (7/1, 7/2) vorgesehenen Antriebs-Endstufen (70, 71) sowie die betreffenden Positionierelementpaare (7/1, 7/2) an einer ersten Tragstruktur (18) und die gemeinsame Antriebs-Vorstufe oder der gemeinsame Antriebs-Vorstufenteil für die betreffenden Positionierelementpaare (7/1, 7/2) an einer zweiten Tragstruktur (63) vorgesehen sind und dass die erste Tragstruktur (18) und die zweite Tragstruktur (63) relativ zueinander in Positionen bewegbar sind, in denen jeweils die gemeinsame Antriebs-Vorstufe (69) oder der gemeinsame Antriebs-Vorstufenteil einerseits und eine der Kolben-Zylinder-Einheiten (26, 27) der betreffenden Antriebs-Endstufen (70, 71) andererseits relativ zueinander in die Kuppelstellung bewegt sind.

15. Positioniervorrichtung nach Anspruch 14, **dadurch gekennzeichnet, dass** die erste Tragstruktur (18) und die zweite Tragstruktur (63) relativ zueinander in Positionen bewegbar sind, in denen jeweils die gemeinsame Antriebs-Vorstufe oder der gemeinsame Antriebs-Vorstufenteil einerseits und eine der Kolben-Zylinder-Einheiten (26, 27) der betreffenden Antriebs-Endstufen (70, 71) andererseits relativ zueinander in die Kuppelstellung bewegt sind, indem die ersten Tragstruktur (18) um eine Drehachse (13) drehbar ist, welche durch Positionierzentren (12/1, 12/2) verläuft, die von den an der ersten Tragstruktur (18) vorgesehenen Positionierelementpaaren (7/1, 7/2) definiert werden.

16. Werkzeugmaschine zum Bearbeiten von Werkstücken, mit einer Bearbeitungseinrichtung (5) sowie mit einer Positioniervorrichtung (1), mittels derer ein Werkstück gegenüber der Bearbeitungseinrichtung (5) positionierbar ist, **dadurch gekennzeichnet, dass** die Positioniervorrichtung (1) nach einem der vorhergehenden Ansprüche ausgebildet ist.

17. Verfahren zum Positionieren von Werkstücken gegenüber einer Bearbeitungseinrichtung (5) einer Werkzeugmaschine (4), durchgeführt mit einer Positioniervorrichtung (1) nach einem der vorhergehenden Ansprüche,
• wobei die beiden einander gegenüberliegenden Positionierelemente (6) mittels des Stellantriebes (3) relativ zueinander in eine Funktionsstellung aufeinander zu bewegt werden, in welcher die Positionierelemente (6) bei Anordnung eines Werkstücks zwischen den Positionierelementen (6) einander gegenüberliegend an der Außenseite des Werkstücks anliegen und das Werkstück in Richtung der durch die in die Funktionsstellung bewegten Positionierelemente (6) definierten Positionierachse festlegen und
• wobei die Positionierelemente (6) mittels der Antriebsvorrichtung der Antriebs-Vorstufe (69) des Stellantriebes (3) relativ zueinander aus einer Ausgangsstellung in eine Zwischenstellung bewegt werden, von der aus-gehend die Positionierelemente (6) mittels der Kolben-Zylinder-Einheit (26, 27) der Antriebs-Endstufe (70, 71) des Stellantriebes (3) relativ zueinander in die Funktionsstellung aufeinander zu bewegt werden,
**dadurch gekennzeichnet, dass**
die Positionierelemente (6) aus der Ausgangsstellung in die Zwischenstellung bewegt werden, indem die Kolben-Zylinder-Einheit (26, 27) der Antriebs-Endstufe (70, 71) mittels des geregelten motorischen Spindelantriebs der Antriebs-Vorstufe (69) in die Antriebsposition zugestellt wird, welcher die Zwischenstellung der Positionierelemente (6) zugeordnet ist und dass die Positionierelemente (6) mittels der in die Antriebsposition zugestellten Kolben-Zylinder-Einheit (26, 27) aus der Zwischenstellung in die Funktionsstellung bewegt werden.

18. Verfahren nach Anspruch 17, **dadurch gekennzeichnet, dass** die Positionierelemente (6) mittels der in die Antriebsposition zugestellten Kolben-Zylinder-Einheit (26, 27) mit einem baulich definierten Antriebshub, insbesondere mit einem baulich definierten maximalen Antriebshub, relativ zueinander aus der Zwischenstellung in die Funktionsstellung bewegt werden.

## Claims

1. Positioning device for positioning workpieces with respect to a processing device (5) of a machine tool (4), having two mutually opposing positioning elements (6) and having a positioning drive (3) by means of which at least one positioning element (6) can be moved relative to the other positioning element (6) and by means of which the positioning elements (6) can thereby be moved relative to each other in the direction towards each other into an operating position, in which the positioning elements (6), when a workpiece is arranged between the positioning elements (6), are in abutment opposite each other with the outer side of the workpiece and secure the workpiece in the direction of a positioning axis (11/1, 11/2) defined by the positioning elements (6) which have been moved into the operating position,
• wherein the positioning drive (3) is constructed with two stages and comprises a drive pre-stage (69) with a drive device and a drive end stage (70, 71) with a piston/cylinder unit (26, 27) which is drivingly connected to the positioning elements (6), and
• wherein the drive device of the drive pre-stage (69) moves the positioning elements (6) relative to each other from a starting position into an intermediate position, from which the piston/cylinder unit (26, 27) of the drive end stage (70, 71) moves the positioning elements (6) relative to each other in the direction towards each other into the operating position,
**characterised in that**
the piston/cylinder unit (26, 27) of the drive end stage (70, 71) is also connected in terms of movement to the positioning elements (6) which are drivingly connected to the piston/cylinder unit (26, 27) of the drive end stage (70, 71), and
**in that** the drive device of the drive pre-stage (69) comprises a controlled motorised spindle drive which has a drive motor (65) and a spindle gear (48, 56) by means of which the drive motor (65) of the motorised spindle drive of the drive pre-stage (69) is drivingly connected to the piston/cylinder unit (26, 27) of the drive end stage (70, 71), wherein the motorised spindle drive of the drive pre-stage (69) positions the piston/cylinder unit (26, 27) of the drive end stage (70, 71) in a drive position which is associated with the intermediate position of the positioning elements (6) and wherein the piston/cylinder unit (26, 27) of the drive end stage (70, 71) which has been positioned in the drive position moves the positioning elements (6) relative to each other in the direction towards each other from the intermediate position into the operating position.

2. Positioning device according to claim 1, **characterised in that** the piston/cylinder unit (26, 27) of the drive end stage (70, 71) which has been positioned in the drive position moves the positioning elements (6) relative to each other with a structurally defined drive stroke, in particular with a structurally defined maximum drive stroke, in the direction towards each other from the intermediate position into the operating position.

3. Positioning device according to either of the preceding claims, **characterised in that** the motorised spindle drive of the drive pre-stage (69) comprises as a drive motor (65) a controlled electric motor and/or as a spindle gear (48, 56) a ball screw drive.

4. Positioning device according to any one of the preceding claims, **characterised in that** the motorised spindle drive of the drive pre-stage (69) is drivingly connected to the piston/cylinder unit (26, 27) of the drive end stage (70, 71) on the cylinder (28, 37) of the piston/cylinder unit (26, 27) of the drive end stage (70, 71).

5. Positioning device according to any one of the preceding claims, **characterised in that** the piston/cylinder unit (26, 27) of the drive end stage (70, 71) is connected in terms of movement to both positioning elements (6).

6. Positioning device according to any one of the preceding claims, **characterised in that** the piston/cylinder unit (26, 27) of the drive end stage (70, 71), which unit has been positioned in the drive position, is drivingly connected by means of a common gear element (30, 39) to both positioning elements (6) and moves both positioning elements (6) by means of the common gear element (30, 39) in order to move the positioning elements (6) from the intermediate position into the operating position.

7. Positioning device according to any one of the preceding claims, **characterised in that** between the drive motor (65) of the drive pre-stage (69) and the piston/cylinder unit (26, 27) of the drive end stage (70, 71) there is provided a releasable coupling which connects a drive-side component (62) which comprises the drive motor (65) of the drive pre-stage (69) and an output-side component (19) of the positioning drive (3), which component comprises the piston/cylinder unit (26, 27) of the drive end stage (70, 71), to each other in a releasable manner.

8. Positioning device according to claim 7, **characterised in that** the output-side component (19) of the positioning drive (3) is provided on a first carrier structure (18) and the drive-side component (62) of the posiioning drive (3) is provided on a second carrier structure (63), and **in that** the first carrier structure (18) and the second carrier structure (63) can be moved relative to each other into a coupling position, in which the output-side component (19) and the drive-side component (62) of the positioning drive (3) can be releasably connected to each other by means of the coupling in order to produce the drive connection between the drive motor (65) of the drive pre-stage (69) and the piston/cylinder unit (26, 27) of the drive end stage (70, 71).

9. Positioning device according to claim 8, **characterised in that**, in addition to the piston/cylinder unit (26, 27) of the drive end stage (70, 71), the positioning elements (6) which are movingly connected and drivingly connected to the piston/cylinder unit (26, 27) are also provided on the first carrier structure (18).

10. Positioning device according to claim 9, **characterised in that** the first carrier structure (18) and the second carrier structure (63) can be moved relative to each other into a coupling position by the first carrier structure (18) being able to be rotated about a rotation axis (13) which extends through a positioning centre (12/1, 12/2) which is defined by the positioning elements (6) provided on the first carrier structure (18).

11. Positioning device according to any one of the preceding claims, **characterised in that** there are provided a plurality of positioning element pairs (71/, 7/2) which each consist of two mutually opposed positioning elements (6) and which define positioning axes (11/1, 11/2) which are offset with respect to each other in the peripheral direction of a workpiece which is secured together by the positioning element pairs (71/, 7/2) and **in that** there is provided a positioning drive (3) which comprises for each of the positioning element pairs (7/1, 7/2) a drive pre-stage (69) which comprises a controlled motorised spindle drive with a drive motor (65) and a spindle gear (48, 56) and which further comprises a drive end stage (70, 71) which comprises a piston/cylinder unit (26, 27), wherein the motorised spindle drive of the drive pre-stage (69) which is provided for a positioning element pair (7/1, 7/2) positions the piston/cylinder unit (26, 27) of the drive end stage (70, 71) which is provided for the respective positioning element pair (7/1, 7/2) in a drive position which is associated with the intermediate position of the positioning elements (6) of the relevant positioning element pair (7/1, 7/2), and wherein the piston/cylinder unit (26, 27) of the drive end stage (70, 71), which unit has been positioned in the drive position, for the relevant positioning element pair (7/1, 7/2) moves the positioning elements (6) of this positioning element pair (7/1, 7/2) relative to each other in the direction towards each other from the intermediate position into the operating position.

12. Positioning device according to claim 11, **characterised in that** the positioning drive (3) for a plurality of positioning element pairs (7/1, 7/2) comprises a common drive pre-stage or a common drive pre-stage component with a common drive motor (65), and **in that** the common drive motor (65) in order to produce a drive connection between the common drive motor (65) and the piston/cylinder units (26, 27) of the drive end stages (70, 71) provided for the relevant positioning element pairs (7/1, 7/2) can be drivingly connected one after the other by means of a releasable coupling to the piston/cylinder units (26, 27) of the drive end stages (70, 71) provided for the relevant positioning element pairs (7/1, 7/2).

13. Positioning device according to claim 12, **characterised in that** the common drive pre-stage or the common drive pre-stage component, on the one hand, and the relevant piston/cylinder units (26, 27) of the drive end stages (70, 71), on the other hand, can be moved relative to each other into a coupling position, in which the common drive motor (65) and the relevant piston/cylinder units (26, 27) of the drive end stages (70, 71) can be drivingly connected to each other by means of the releasable coupling.

14. Positioning device according to claim 13, **characterised in that** the piston/cylinder units (26, 27) of the drive end stages (70, 71) provided for the relevant positioning element pairs (7/1, 7/2) and the relevant positioning element pairs (7/1, 7/2) are provided on a first carrier structure (18) and the common drive pre-stage or the common drive pre-stage component for the relevant positioning element pairs (7/1, 7/2) are provided on a second carrier structure (63) and **in that** the first carrier structure (18) and the second carrier structure (63) can be moved relative to each other into positions in which the common drive pre-stage (69) or the common drive pre-stage component, on the one hand, and one of the piston/cylinder units (26, 27) of the relevant drive end stages (70, 71), on the other hand, are moved relative to each other into the coupling position.

15. Positioning device according to claim 14, **characterised in that** the first carrier structure (18) and the second carrier structure (63) can be moved relative to each other into positions in which the common drive pre-stage or the common drive pre-stage component, on the one hand, and one of the piston/cylinder units (26, 27) of the relevant drive end stages (70, 71), on the other hand, are moved relative to each other into the coupling position by the first carrier structure (18) being able to be rotated about a rotation axis (13) which extends through positioning centres (12/1, 12/2) which are defined by the positioning element pairs (7/1, 7/2) provided on the first carrier structure (18).

16. Machine tool for processing workpieces, having a processing device (5) and having a positioning device (1) by means of which a workpiece can be positioned with respect to the processing device (5), **characterised in that** the positioning device (1) is constructed according to any one of the preceding claims.

17. Method for positioning workpieces with respect to a processing device (5) of a machine tool (4), carried out using a positioning device (1) according to any one of the preceding claims,
• wherein the two mutually opposing positioning elements (6) are moved relative to each other by means of the positioning drive (3) in the direction towards each other into an operating position in which the positioning elements (6), when a workpiece is arranged between the positioning elements (6), are in abutment opposite each other with the outer side of the workpiece and secure the workpiece in the direction of the positioning axis defined by the positioning elements (6) which have been moved into the operating position, and
• wherein the positioning elements (6) are moved by means of the drive device of the drive pre-stage (69) of the actuation drive (3) relative to each other from a starting position into an intermediate position, from which the positioning elements (6) are moved by means of the piston/cylinder unit (26, 27) of the drive end stage (70, 71) of the positioning drive (3) relative to each other in the direction towards each other into the operating position,
**characterised in that**
the positioning elements (6) are moved from the starting position into the intermediate position by the piston/cylinder unit (26, 27) of the drive end stage (70, 71) being positioned by means of the controlled motorised spindle drive of the drive pre-stage (69) in the drive position which is associated with the intermediate position of the positioning elements (6) and **in that** the positioning elements (6) are moved by means of the piston/cylinder unit (26, 27) which has been positioned in the drive position from the intermediate position into the operating position.

18. Method according to claim 17, **characterised in that** the positioning elements (6) are moved relative to each other by means of the piston/cylinder unit (26, 27) which has been positioned in the drive position with a structurally defined drive stroke, in particular with a structurally defined maximum drive stroke, from the intermediate position into the operating position.

## Revendications

1. Dispositif de positionnement conçu pour positionner des pièces à usiner par rapport à un système d'usinage (5) d'une machine-outil (4), comprenant deux éléments de positionnement (6) placés en regard l'un de l'autre, et un entraînement de positionnement (3) au moyen duquel au moins un élément de positionnement (6) peut être mû par rapport à l'autre élément de positionnement (6) et au moyen duquel, de ce fait, les éléments de positionnement (6) peuvent être animés de mouvements relatifs en direction l'un de l'autre jusqu'à une position fonctionnelle dans laquelle, lorsqu'une pièce à usiner est interposée entre lesdits éléments de positionnement (6), lesdits éléments de positionnement (6) sont en applique, en regard l'un de l'autre, contre la face extérieure de ladite pièce à usiner et bloquent ladite pièce à usiner dans la direction d'un axe de positionnement (11/1, 11/2) défini par lesdits éléments de positionnement (6) mus jusqu'à la position fonctionnelle,
• sachant que ledit entraînement de réglage (3) est réalisé en deux étages et inclut un étage préalable d'entraînement (69), muni d'un dispositif d'entraînement, et un étage final d'entraînement (70, 71) pourvu d'un vérin (26, 27) en liaison d'entraînement avec lesdits éléments de positionnement (6), et
• sachant que ledit dispositif d'entraînement dudit étage préalable d'entraînement (69) imprime des mouvements relatifs aux éléments de positionnement (6), depuis une position initiale, jusqu'à une position intermédiaire à partir de laquelle le vérin (26, 27) dudit étage final d'entraînement (70, 71) imprime des mouvements relatifs auxdits éléments de positionnement (6) en direction l'un de l'autre, jusqu'à ladite position fonctionnelle,
**caractérisé par le fait**
**que** le vérin (26, 27) de l'étage final d'entraînement (70, 71) est également en liaison motrice avec les éléments de positionnement (6) en liaison d'entraînement avec ledit vérin (26, 27) dudit étage final d'entraînement (70, 71) ; et
**que** le dispositif d'entraînement de l'étage préalable d'entraînement (69) inclut un entraînement par broche, motorisé et régulé, qui comporte un moteur d'entraînement (65) et un mécanisme à broche (48, 56) par l'intermédiaire duquel ledit moteur d'entraînement (65) de l'entraînement par broche motorisé dudit étage préalable d'entraînement (69) est en liaison d'entraînement avec ledit vérin (26, 27) de l'étage final d'entraînement (70, 71), sachant que l'entraînement par broche motorisé de l'étage préalable d'entraînement (69) pilote le vérin (26, 27) de l'étage final d'entraînement (70, 71) vers une position d'entraînement à laquelle la position intermédiaire des éléments de positionnement (6) est associée, et sachant que ledit vérin (26, 27) dudit étage final d'entraînement (70, 71), piloté vers ladite position d'entraînement, imprime des mouvements relatifs auxdits éléments de positionnement (6) en direction l'un de l'autre, jusqu'à ladite position fonctionnelle à partir de ladite position intermédiaire.

2. Dispositif de positionnement selon la revendication 1, **caractérisé par le fait que** le vérin (26, 27) de l'étage final d'entraînement (70, 71), piloté vers la position d'entraînement, imprime des mouvements relatifs aux éléments de positionnement (6) en direction l'un de l'autre, jusqu'à la position fonctionnelle à partir de la position intermédiaire, avec une course d'entraînement structurellement définie, en particulier avec une course maximale d'entraînement structurellement définie.

3. Dispositif de positionnement selon l'une des revendications précédentes, **caractérisé par le fait que** l'entraînement par broche motorisé de l'étage préalable d'entraînement (69) inclut un moteur électrique régulé, en tant que moteur d'entraînement (65), et/ou une vis d'entraînement à billes en tant que mécanisme à broche (48, 56).

4. Dispositif de positionnement selon l'une des revendications précédentes, **caractérisé par le fait que** l'entraînement par broche motorisé de l'étage préalable d'entraînement (69) est en liaison d'entraînement, avec le vérin (26, 27) de l'étage final d'entraînement (70, 71), au niveau du cylindre (28, 37) dudit vérin (26, 27) dudit étage final d'entraînement (70, 71).

5. Dispositif de positionnement selon l'une des revendications précédentes, **caractérisé par le fait que** le vérin (26, 27) de l'étage final d'entraînement (70, 71) est en liaison motrice avec les deux éléments de positionnement (6).

6. Dispositif de positionnement selon l'une des revendications précédentes, **caractérisé par le fait que** le vérin (26, 27) de l'étage final d'entraînement (70, 71), piloté vers la position d'entraînement, est en liaison d'entraînement avec les deux éléments de positionnement (6) par l'intermédiaire d'un élément de transmission (30, 39) commun, et meut les deux éléments de positionnement (6), au moyen dudit élément de transmission (30, 39) commun, en vue du mouvement desdits éléments de positionnement (6) de la position intermédiaire à la position fonctionnelle.

7. Dispositif de positionnement selon l'une des revendications précédentes, **caractérisé par le fait qu'**un accouplement libérable, prévu entre le moteur d'entraînement (65) de l'étage préalable d'entraînement (69) et le vérin (26, 27) de l'étage final d'entraînement (70, 71), instaure la liaison mutuelle amovible d'une partie (62) qui est située côté menant et inclut ledit moteur d'entraînement (65) dudit étage préalable d'entraînement (69), et d'une partie (19) de l'entraînement de positionnement (3) qui est située côté mené et inclut ledit vérin (26, 27) dudit étage final d'entraînement (70, 71).

8. Dispositif de positionnement selon la revendication 7, **caractérisé par le fait que** la partie (19) de l'entraînement de positionnement (3), qui est située côté mené, est prévue sur une première structure de support (18), la partie (62) dudit entraînement de positionnement (3), située côté menant, étant prévue sur une seconde structure de support (63) ; et **par le fait que** ladite première structure de support (18) et ladite seconde structure de support (63) peuvent être mues, l'une par rapport à l'autre, jusqu'à une position d'accouplement dans laquelle ladite partie (19) située côté mené, et ladite partie (62) située côté menant dudit entraînement de positionnement (3), peuvent être reliées amoviblement l'une à l'autre, par l'intermédiaire de l'accouplement, en vue d'instaurer la liaison d'entraînement entre le moteur d'entraînement (65) de l'étage préalable d'entraînement (69) et le vérin (26, 27) de l'étage final d'entraînement (70, 71).

9. Dispositif de positionnement selon la revendication 8, **caractérisé par le fait que** les éléments de positionnement (6), en liaison motrice et en liaison d'entraînement avec le vérin (26, 27) de l'étage final d'entraînement (70, 71), sont prévus eux aussi sur la première structure de support (18), en plus dudit vérin (26, 27).

10. Dispositif de positionnement selon la revendication 9, **caractérisé par le fait que** la première structure de support (18) et la seconde structure de support (63) peuvent être mues l'une par rapport à l'autre, jusqu'à une position d'accouplement, en ce sens que la première structure de support (18) peut tourner autour d'un axe de rotation (13) passant par un centre de positionnement (12/1, 12/2) défini par les éléments de positionnement (6) prévus sur ladite première structure de support (18).

11. Dispositif de positionnement selon l'une des revendications précédentes, **caractérisé par** la présence de plusieurs paires (7/1, 7/2) d'éléments de positionnement qui sont constituées, à chaque fois, de deux éléments de positionnement (6) placés en regard l'un de l'autre, et qui définissent des axes de positionnement (11/1, 11/2) mutuellement décalés dans la direction périphérique d'une pièce à usiner bloquée associativement par lesdites paires (7/1, 7/2) d'éléments de positionnement ; et par la présence d'un entraînement de positionnement (3) comprenant, pour chacune desdites paires (7/1, 7/2) d'éléments de positionnement, un étage préalable d'entraînement (69) incluant un entraînement par broche, motorisé et régulé, qui comporte un moteur d'entraînement (65) et un mécanisme à broche (48, 56), et un étage final d'entraînement (70, 71) incluant un vérin (26, 27), sachant que l'entraînement par broche motorisé dudit étage préalable d'entraînement (69), prévu pour une paire (7/1, 7/2) d'éléments de positionnement, pilote le vérin (26, 27) de l'étage final d'entraînement (70, 71), prévu pour la paire concernée (7/1, 7/2) d'éléments de positionnement, vers une position d'entraînement auquel est associée la position intermédiaire des éléments de positionnement (6) de ladite paire concernée (7/1, 7/2) d'éléments de positionnement, et sachant que ledit vérin (26, 27) dudit étage final d'entraînement (70, 71) affecté à ladite paire concernée (7/1, 7/2) d'éléments de positionnement, piloté vers ladite position d'entraînement, imprime des mouvements relatifs aux éléments de positionnement (6) de cette paire (7/1, 7/2) d'éléments de positionnement, en direction l'un de l'autre, jusqu'à la position fonctionnelle à partir de ladite position intermédiaire.

12. Dispositif de positionnement selon la revendication 11, **caractérisé par le fait que** l'entraînement de positionnement (3) est doté, pour plusieurs paires (7/1, 7/2) d'éléments de positionnement, d'un étage préalable d'entraînement commun ou d'une partie commune d'étage préalable d'entraînement, comportant un moteur commun d'entraînement (65) ; et **par le fait que**, pour instaurer une liaison d'entraînement entre ledit moteur commun d'entraînement (65) et les vérins (26, 27) des étages finals d'entraînement (70, 71) prévus pour les paires concernées (7/1, 7/2) d'éléments de positionnement, ledit moteur commun d'entraînement (65) peut être mis successivement en liaison d'entraînement, par l'intermédiaire d'un accouplement libérable, avec lesdits vérins (26, 27) desdits étages finals d'entraînement (70, 71) prévus pour lesdites paires concernées (7/1, 7/2) d'éléments de positionnement.

13. Dispositif de positionnement selon la revendication 12, **caractérisé par le fait que**, d'une part, l'étage préalable d'entraînement commun ou la partie commune d'étage préalable d'entraînement et, d'autre part, les vérins concernés (26, 27) des étages finals d'entraînement (70, 71), peuvent être animés de mouvements relatifs jusqu'à une position d'accouplement dans laquelle le moteur commun d'entraînement (65), et lesdits vérins concernés (26, 27) desdits étages finals d'entraînement (70, 71), peuvent être mis en liaison mutuelle d'entraînement par l'intermédiaire de l'accouplement libérable.

14. Dispositif de positionnement selon la revendication 13, **caractérisé par le fait que** les vérins (26, 27) des étages finals d'entraînement (70, 71) prévus pour les paires concernées (7/1, 7/2) d'éléments de positionnement, ainsi que lesdites paires concernées (7/1, 7/2) d'éléments de positionnement, sont prévus sur une première structure de support (18), l'étage préalable d'entraînement commun ou la partie commune d'étage préalable d'entraînement, affecté(e) auxdites paires concernées (7/1, 7/2) d'éléments de positionnement, étant prévu(e) sur une seconde structure de support (63) ; et **par le fait que** ladite première structure de support (18) et ladite seconde structure de support (63) peuvent être animées de mouvements relatifs jusqu'à des positions auxquels, d'une part, ledit étage préalable d'entraînement commun (69) ou ladite partie commune d'étage préalable d'entraînement et, d'autre part, l'un des vérins (26, 27) des étages finals d'entraînement (70, 71) concernés, sont respectivement animés de mouvements relatifs jusqu'à la position d'accouplement.

15. Dispositif de positionnement selon la revendication 14, **caractérisé par le fait que** la première structure de support (18) et la seconde structure de support (63) peuvent être animées de mouvements relatifs jusqu'à des positions auxquels, d'une part, l'étage préalable d'entraînement commun ou la partie commune d'étage préalable d'entraînement et, d'autre part, l'un des vérins (26, 27) des étages finals d'entraînement (70, 71) concernés, sont respectivement animés de mouvements relatifs jusqu'à la position d'accouplement, en ce sens que la première structure de support (18) peut tourner autour d'un axe de rotation (13) passant par des centres de positionnement (12/1, 12/2) définis par les paires (7/1, 7/2) d'éléments de positionnement prévues sur ladite première structure de support (18).

16. Machine-outil dévolue à l'usinage de pièces et comprenant un système d'usinage (5), ainsi qu'un dispositif de positionnement (1) au moyen duquel une pièce à usiner peut être positionnée par rapport audit système d'usinage (5), **caractérisée par le fait que** le dispositif de positionnement (1) est réalisé en conformité avec l'une des revendications précédentes.

17. Procédé de positionnement de pièces à usiner par rapport à un système d'usinage (5) d'une machine-outil (4), mis en oeuvre à l'aide d'un dispositif de positionnement (1) conforme à l'une des revendications précédentes,
• sachant que les deux éléments de positionnement (6) placés en regard l'un de l'autre peuvent être animés de mouvements relatifs en direction l'un de l'autre, au moyen de l'entraînement de positionnement (3), jusqu'à une position fonctionnelle dans laquelle, lorsqu'une pièce à usiner est interposée entre lesdits éléments de positionnement (6), lesdits éléments de positionnement (6) sont en applique, en regard l'un de l'autre, contre la face extérieure de ladite pièce à usiner et bloquent ladite pièce à usiner dans la direction de l'axe de positionnement défini par lesdits éléments de positionnement (6) mus jusqu'à la position fonctionnelle, et
• sachant que lesdits éléments de positionnement (6) sont animés de mouvements relatifs au moyen du dispositif d'entraînement de l'étage préalable d'entraînement (69) de l'entraînement de positionnement (3), depuis une position initiale, jusqu'à une position intermédiaire à partir de laquelle lesdits éléments de positionnement (6) sont animés de mouvements relatifs en direction l'un de l'autre, jusqu'à ladite position fonctionnelle, au moyen du vérin (26, 27) de l'étage final d'entraînement (70, 71) dudit entraînement de réglage (3),
**caractérisé par le fait que**
les éléments de positionnement (6) sont mus de la position initiale à la position intermédiaire en ce sens que le vérin (26, 27) de l'étage final d'entraînement (70, 71) est piloté, au moyen de l'entraînement par broche de l'étage préalable d'entraînement (69), motorisé et régulé, jusqu'à la position d'entraînement auquel ladite position intermédiaire desdits éléments de positionnement (6) est associée ; et **par le fait que** lesdits éléments de positionnement (6) sont mus, de ladite position intermédiaire à la position fonctionnelle, au moyen dudit vérin (26, 27) piloté jusqu'à ladite position d'entraînement.

18. Procédé selon la revendication 17, **caractérisé par le fait que** les éléments de positionnement (6) sont animés de mouvements relatifs en direction l'un de l'autre de la position intermédiaire à la position fonctionnelle, au moyen du vérin (26, 27) piloté dans la position d'entraînement, avec une course d'entraînement structurellement définie, en particulier avec une course maximale d'entraînement structurellement définie.
